# EUROPEAN PATENT APPLICATION

(11) **EP 3 960 793 A1**
(43) Date of publication of application: **02.03.2022**
(21) Application number: 20795247.4
(22) Date of filing: 23.04.2020
(51) Int. Cl.: C08J 3/22, C08K 7/06, C08L 23/26, C08L 51/06, C08L 101/00, C08K 3/04

(54) **ELECTROCONDUCTIVE RESIN COMPOSITION, PRODUCTION METHOD THEREFOR, AND MOLDED OBJECT OBTAINED THEREFROM**

(30) Priority: 26.04.2019 JP 2019085316; 11.11.2019 JP 2019203888
(71) Applicant: Mitsui Chemicals, Inc., Tokyo 105-7122 (JP)
(72) Inventor: KANAYA, Hirotaka, Chiba 299-0265 (JP); TAKAHASHI, Yosuke, Chiba 299-0265 (JP); MATSUNAGA, Koji, Chiba 299-0265 (JP); KAWABE, Kuniaki, Chiba 299-0265 (JP)
(74) Representative: Hoffmann Eitle
(86) International application number: PCT/JP2020/017418
(87) International publication number: WO 2020/218389

(57) **Abstract**

The present invention addresses the problem of providing an electroconductive resin composition which combines high electrical conductivity with excellent processability. The electroconductive resin composition comprises a thermoplastic resin (A), carbon nanotubes (B) having an outer diameter of 100 nm or smaller, and an aromatic-monomer-modified polyolefin wax (C) obtained by modifying a polyolefin wax with an aromatic monomer. The composition comprises the thermoplastic resin (A), the carbon nanotubes (B), and the aromatic-monomer-modified polyolefin wax (C) in amounts of 74.9-99.4 parts by mass, 0.5-25 parts by mass, and 0.1-10 parts by mass, respectively, with respect to 100 parts by mass of the sum of the thermoplastic resin (A), the carbon nanotubes (B), and the aromatic-monomer-modified polyolefin wax (C).

## Description

### Technical Field

The present invention relates to an electrically conductive resin composition, a method of producing the same, and a molded product obtained therefrom.

### Background Art

Thermoplastic resins are utilized in a wide variety of fields such as automotive components, electrical/electronic components and structural materials due to their features such as an excellent mechanical strength, heat resistance and moldability. However, since many thermoplastic resins have insulation properties, it is essential to combine them with an electrically conductive material in order to impart electrical conductivity thereto. As electrically conductive materials, metal powders, metal fibers, and carbon materials are generally well known. Among these, carbon materials can reduce the weight of molded products, and various types of carbon materials have been developed. Examples of carbon materials used as electrically conductive materials include carbon black, graphite, and carbon nanotubes. The combining of these carbon materials with thermoplastic resins is carried out by forced kneading and dispersion with an extruding machine or a kneading machine such as a kneader.

However, carbon nanotubes are easily destroyed by forced kneading and dispersion upon combining with thermoplastic resins. Therefore, in electrically conductive resin compositions containing carbon nanotubes, the electrical conductivity as expected has often not been achieved. Also, carbon nanotubes have a particularly large specific surface area among carbon materials. Thus, it tends to cause a rapid increase in viscosity upon combining with resins, and the amount added is limited. This also presents a problem in that it is difficult to add a sufficient electrical conductivity to electrically conductive resin compositions.

Here, Patent Literature 1 describes a combination of carbon nanotubes and a propylene-olefin-copolymer wax for the purpose of enhancing electrical conductivity and processability. In addition, Patent Literature 2 describes a combination of a low density olefin wax copolymerized using a metallocene catalyst, that is, an olefin wax with a low melting point, with carbon nanotubes and a resin.

On the other hand, Patent Literature 3 and Patent Literature 4 describe coating the surface of carbon nanotubes with a low molecular weight polyethylene wax or a waterborne resin.

### Citation List

### Patent Literature

PTL 1
   Japanese Patent No. 5389181
PTL 2
   Japanese Patent No. 5597318
PTL 3
   Japanese Patent No. 4787892
PTL 4
   Japanese Patent Application Laid-Open No. 2018-177586

### Summary of Invention

### Technical Problem

In the Patent Literatures 1 and 2 mentioned above, olefin waxes are used as the wax. Therefore, there is a problem that, when a polar resin (for example, a chlorinated resin as typified by polyvinyl chloride or an acrylic resin as typified by polymethyl methacrylate) is used as the thermoplastic resin, it is difficult for the thermoplastic resin and the wax to be compatibilized with each other, and sufficient effects cannot be obtained.

In addition, Patent Literatures 3 and 4 require the carbon nanotubes to be coated with a wax or waterborne resin, which presents problems of complicated operations and increased costs.

The present invention is established in view of such circumstances. That is, an object of the present invention is to provide an electrically conductive resin composition having both high electrical conductivity and excellent processability.

### Solution to Problem

The present inventors have found that, an electrically conductive resin composition achieving both electrical conductivity and processability can be obtained by combining an aromatic monomer-modified polyolefin wax (C) and a carbon nanotube (B) with a diameter of 100 nm or less. That is, the present invention relates to the following [1] to [7].

[1] An electrically conductive resin composition, including: a thermoplastic resin (A); a carbon nanotube (B) with an outer diameter of 100 nm or less; an aromatic monomer-modified polyolefin wax (C) obtained by modifying a polyolefin wax with an aromatic monomer, in which the composition comprises 74.9 to 99.4 parts by mass of the thermoplastic resin (A), 0.5 to 25 parts by mass of the carbon nanotube (B), and 0.1 to 10 parts by mass of the aromatic monomer-modified polyolefin wax (C) based on 100 parts by mass of the total amount of the thermoplastic resin (A), the carbon nanotube (B), and the aromatic monomer-modified polyolefin wax (C).
[2] The electrically conductive resin composition according to [1], in which the aromatic monomer-modified polyolefin wax (C) satisfies the following (i) to (iv):
   (i) a number average molecular weight (Mn) in terms of polystyrene, measured by gel permeation chromatography (GPC), ranges from 300 to 10,000;
   (ii) a ratio (Mw/Mn) between a weight average molecular weight (Mw) and a number average molecular weight (Mn), measured by gel permeation chromatography (GPC), is 9.0 or less;
   (iii) a softening point measured in accordance with JIS K2207 ranges from 70 to 170°C; and
   (iv) a density measured in accordance with JIS K7112 ranges from 830 to 1,200 kg/m³.
[3] The electrically conductive resin composition according to [1] or [2], in which the aromatic monomer-modified polyolefin wax (C) is a compound obtained by modifying a copolymer of ethylene and at least one α-olefin selected from C₃₋₁₂ α-olefins with an aromatic monomer.
[4] The electrically conductive resin composition according to any one of [1] to [3], in which an amount of structural units derived from the aromatic monomer in the aromatic monomer-modified polyolefin wax (C) ranges from 5 to 95mass%.
[5] The electrically conductive resin composition according to any one of [1] to [4], in which the thermoplastic resin (A) is at least one resin selected from the group consisting of an ethylene (co)polymer, a propylene (co)polymer, and a polycarbonate.
[6] A method of producing the electrically conductive resin composition according to any one of [1] to [5], including: providing a masterbatch comprising the thermoplastic resin (A), the carbon nanotube (B), and the aromatic monomer-modified polyolefin wax (C); and melt kneading the masterbatch and the thermoplastic resin (A).
[7] A molded product obtained from the electrically conductive resin composition according to any one of [1] to [5].

### Advantageous Effects of Invention

According to the present invention, an electrically conductive resin composition having both high electrical conductivity and excellent processability can be provided.

### Brief Description of Drawings

FIG. 1 is a graph showing the relationship between the viscosity average molecular weights (Mv) of the aromatic monomer-modified polyolefin waxes (C) used in Example 2 and Examples 4 to 7, and Comparative Example 4, and the electrical conductivities (volume resistivity values) of electrically conductive resin compositions; and
FIG. 2 shows electron micrographs illustrating the states of carbon nanotube (B) in the electrically conductive resin compositions of Examples 2, 4, and 5, and Comparative Example 4.

### Description of Embodiments

Hereinafter, the present invention will be described specifically. Note that, unless otherwise noted, "x to y" indicating a numerical range refers to x or more and y or less in the following description.

### 1. Electrically Conductive Resin Composition

An electrically conductive resin composition of the present invention contains a thermoplastic resin (A), a carbon nanotube (B) with an outer diameter of 100 nm or less, and an aromatic monomer-modified polyolefin wax (C).

When the total of the thermoplastic resin (A), the carbon nanotube (B), and the aromatic monomer-modified polyolefin wax (C) in the electrically conductive resin composition of the present invention is set to be 100 parts by mass, the amount of the thermoplastic resin (A) is 74.9 to 99.4 parts by mass, preferably 80 to 99 parts by mass, and more preferably 85 to 98.5 parts by mass. In order to achieve high processability, it is preferable that the content of the thermoplastic resin (A) be high. The lower limit of the thermoplastic resin (A) in an electrically conductive resin composition that requires particularly high processability is 93 parts by mass, preferably 95 parts by mass, and more preferably 97 parts by mass.

Meanwhile, when the total of the thermoplastic resin (A), the carbon nanotube (B), and the aromatic monomer-modified polyolefin wax (C) in the electrically conductive resin composition is set to be 100 parts by mass, the amount of the carbon nanotube (B) is 0.5 to 25 parts by mass, preferably 1 to 20 parts by mass, and more preferably 1.5 to 15 parts by mass. When the electrically conductive resin composition (or a molded product thereof) contains 0.5 parts by mass or more of the carbon nanotube (B), the electrical conductivity thereof becomes satisfactory. Moreover, when the amount of the carbon nanotube (B) is 25 parts by mass or less, the processability of the electrically conductive resin composition becomes satisfactory. Note that, in order to achieve a high electrical conductivity, that is, a low volume resistivity value, it is preferable to increase the amount of the carbon nanotube (B). The lower limit of the carbon nanotube (B) in an electrically conductive resin composition that requires a particularly high electrical conductivity is 3 parts by mass, preferably 5 parts by mass, and more preferably 7 parts by mass.

In addition, when the total of the thermoplastic resin (A), the carbon nanotube (B), and the aromatic monomer-modified polyolefin wax (C) in the electrically conductive resin composition is set to be 100 parts by mass, the amount of the aromatic monomer-modified polyolefin wax (C) is 0.1 to 10 parts by mass, preferably 0.2 to 8 parts by mass, and more preferably 0.3 to 5 parts by mass. When the electrically conductive resin composition contains 0.1 parts by mass or more of the aromatic monomer-modified polyolefin wax (C), the electrical conductivity and processability thereof are likely to become satisfactory. On the other hand, the content of the aromatic monomer-modified polyolefin wax (C) is 10 parts by mass or less, it is difficult to impair the properties that the thermoplastic resin (A) inherently has, and the processability of the electrically conductive resin composition is likely to become satisfactory.

Here, the electrical conductivity of the electrically conductive resin composition (or a molded product thereof) is evaluated as the volume resistivity value measured in accordance with ASTM D257. The preferred volume resistivity value of the electrically conductive resin composition (or a molded product thereof) is appropriately selected depending on the application. For example, when the electrically conductive resin composition of the present invention is used as a packaging material for semiconductor products such as an IC tray, a silicon wafer case, or a carrier tape, it is preferable that the volume resistivity value of the electrically conductive resin composition be 1.0 × 10⁷ to 1.0 × 10⁹ Ω·cm. Moreover, when the electrically conductive resin composition is used as a floor material for a clean room, a belt conveyor, a light electrical member for OA equipment, or a base material for electrostatic coating, it is preferable that the volume resistivity value thereof be 1.0 × 10⁴ to 1.0 × 10⁶ Ω·cm. Furthermore, when the electrically conductive resin composition is used as an electromagnetic wave shielding member for OA equipment, it is preferable that the volume resistivity value thereof be 1.0 × 10⁻¹ to 1.0 × 10 Ω·cm. The volume resistivity value of the electrically conductive resin composition is adjusted depending on the type or content of the carbon nanotube (B), as well as the type or content of the aromatic monomer-modified polyolefin wax (C).

Furthermore, the bending elastic modulus of the electrically conductive resin composition, measured in accordance with JIS K7171 (ISO 178), is preferably 100 to 400%, more preferably 100 to 300%, and further preferably 100 to 250% relative to the bending elastic modulus of the thermoplastic resin (A) alone, which is contained in the electrically conductive resin composition. When the bending elastic modulus of the electrically conductive resin composition is within the range described above, reduction of the bending elastic modulus of the electrically conductive resin composition due to addition of the carbon nanotube (B) is small, making it easier to apply the electrically conductive resin composition to various applications. Here, the bending elastic modulus of the electrically conductive resin composition is adjusted depending on the composition of the electrically conductive resin composition (in particular, the type of the thermoplastic resin (A), the content of the carbon nanotube (B), or the like).

Hereinafter, the components contained in the electrically conductive resin composition and the physical properties and the like of the electrically conductive resin composition will be described.

### 1-1. Thermoplastic Resin (A)

### 1-1-1. Type of Thermoplastic Resin (A)

The thermoplastic resin (A) contained in the electrically conductive resin composition is appropriately selected depending on the application of the electrically conductive resin composition. Representative examples of the thermoplastic resins (A) that can be used in the electrically conductive resin composition include the following resins (1) to (16). The electrically conductive resin composition may contain only one of them, or may contain two or more of them:
(1) olefin polymers;
(2) polyamides;
(3) polyesters;
(4) polyacetals;
(5) styrene resins;
(6) acrylic resins;
(7) polycarbonates;
(8) polyphenylene oxide;
(9) chlorinated resins;
(10) vinyl acetate resins;
(11) ethylene-(meth)acrylic acid ester copolymers;
(12) ethylene-(meth)acrylic acid resins and ionomer resins thereof;
(13) vinyl alcohol resins;
(14) cellulose resins;
(15) thermoplastic elastomers; and
(16) various copolymerized rubbers.

Each of the thermoplastic resins (1) to (16) described above will be described specifically.

### (1) Olefin Polymers

Examples of the olefin polymers include olefin homopolymers such as polyethylene, polypropylene, poly(1-butene), poly(4-methyl-1-pentene) and polymethylbutene; and olefin copolymers such as an ethylene-α-olefin random copolymer, propylene-ethylene random copolymer, ethylene-α-olefin-nonconjugated polyene copolymer, and 4-methyl-1-pentene-α-olefin copolymer. Among the olefin polymers described above, ethylene (co)polymers or propylene (co)polymers are preferable.

The ethylene (co)polymer is preferably an ethylene homopolymer (polyethylene) or a copolymer of ethylene and a C₃₋₁₂ α-olefin. Specific examples of the ethylene homopolymer include ultra-high molecular weight polyethylene, high density polyethylene, medium density polyethylene, low density polyethylene, and linear low density polyethylene.

On the other hand, when the ethylene (co)polymer is a copolymer of ethylene and a C₃₋₁₂ α-olefin, the amount (a) of structural units derived from ethylene is preferably 91.0 to 99.9mol%, more preferably 93.0 to 99.9mol%, further preferably 95.0 to 99.9mol%, and particularly preferably 95.0 to 99.0mol%. Meanwhile, the amount (b) of structural units derived from the α-olefin having 3 or more carbon atoms is preferably 0.1 to 9.0mol%, more preferably 0.1 to 7.0mol%, further preferably 0.1 to 5.0mol%, and particularly preferably 1.0 to 5.0mol%. Note that (a) + (b) = 100mol%. The content ratio of structural units in the ethylene copolymer described above can be determined through analysis of the ¹³C-NMR spectrum.

Here, examples of the C₃₋₁₂ α-olefin include linear or branched α-olefins such as propylene, 1-butene, 1-pentene, 3-methyl-1-butene, 1-hexene, 4-methyl-1-pentene, 3-methyl-1-pentene, 1-octene, 1-decene, and 1-dodecene. The α-olefin is preferably propylene, 1-butene, 1-hexene, 4-methyl-1-pentene, or 1-octene. It is further preferably a C₃₋₈ α-olefin, and particularly preferably propylene or 1-butene. When ethylene and propylene or 1-butene are copolymerized, the processability of the electrically conductive resin composition becomes satisfactory, and furthermore, the appearance, mechanical strength, and the like of the molded product to be obtained also become satisfactory. Note that, for the ethylene (co)polymer, one α-olefin may be used singly, or two or more α-olefins may be used in combination.

The melt flow rate (MFR) of the ethylene (co)polymer, measured in accordance with ISO 1133 at 190°C and with a load of 2.16 kg, is preferably 0.01 to 500 g/10 min and more preferably 0.1 to 100 g/10 min. When the MFR of the ethylene (co)polymer is within the range described above, the flowability upon molding becomes satisfactory and a molded product with a satisfactory mechanical strength is likely to be obtained.

On the other hand, the propylene (co)polymer is preferably a propylene homopolymer (polypropylene) or a copolymer of propylene and ethylene or a C₄₋₁₂ α-olefin.

When the propylene (co)polymer is a copolymer of propylene and ethylene, the amount of structural units derived from propylene is preferably 60 to 99.5mol%. The amount of structural units derived from propylene is preferably 80 to 99mol%, more preferably 90 to 98.5mol%, and further preferably 95 to 98mol%. Note that the total of the amount of structural units derived from propylene and the amount of structural units derived from ethylene is 100mol%. When a propylene (co)polymer with a large amount of structural units derived from propylene is used, the heat resistance, appearance, and mechanical strength of the molded product to be obtained become satisfactory.

When the propylene (co)polymer is a copolymer of propylene and a C₄₋₁₂ α-olefin, examples of the C₄₋₁₂ α-olefin include linear or branched α-olefins such as 1-butene, 1-pentene, 3-methyl-1-butene, 1-hexene, 4-methyl-1-pentene,3-methyl-1-pentene, 1-octene, 1-decene, and 1-dodecene. Among these, 1-butene is particularly preferable. In addition, the propylene-α-olefin copolymer may further include structural units derived from an olefin other than C₄₋₁₂ olefins, and for example, structural units derived from ethylene may be included in a small amount, for example, in an amount of 10mol% or less. On the other hand, when structural units derived from ethylene are not included, the balance between the heat resistance and mechanical strength in the molded product to be obtained is likely to become particularly satisfactory. For the propylene (co)polymer, one α-olefin may be used singly, or two or more α-olefins may be used in combination.

When the propylene (co)polymer described above is a propylene-α-olefin copolymer, the amount (a') of structural units derived from propylene is preferably 60 to 90mol%, more preferably 65 to 88mol%, further preferably 70 to 85mol%, and particularly preferably 75 to 82mol%. Meanwhile, the amount (b') of structural units derived from the α-olefin having 4 or more carbon atoms is preferably 10 to 40mol%, more preferably 12 to 35mol%, further preferably 15 to 30mol%, and particularly preferably 18 to 25mol%. Note that (a') + (b') = 100mol%.

When the composition of the propylene-α-olefin copolymer is within the range described above, a molded product with an excellent appearance can be obtained. The reason behind this is not clear, but it is believed that since the crystallization rate is slow when the composition is as described above, the electrically conductive resin composition flows for a longer time in a metal mold or during a cooling step, and as a result, the surface is likely to become smooth. In addition, when the composition is within the range described above, the mechanical strength and heat resistance of the molded product to be obtained become satisfactory.

Note that the melting point (Tm) of the propylene-α-olefin copolymer measured by a differential scanning calorimetry (DSC) is preferably 60 to 120°C, more preferably 65 to 100°C, and further preferably 70 to 90°C.

Alternatively, the olefin polymer may be an ethylene-α-olefin-nonconjugated polyene copolymer. In this case, the copolymer is preferably a copolymer of ethylene, a C₃₋₁₂ α-olefin, and a nonconjugated polyene, and more preferably a polymer in which these are copolymerized randomly. The α-olefin is preferably a C₃₋₁₂ α-olefin, and examples thereof include propylene, 1-butene, 1-pentene, 3-methyl-1-butene, 1-hexene, 4-methyl-1-pentene,3-methyl-1-pentene, 1-octene, 1-decene, and 1-dodecene. In addition, examples of the nonconjugated polyene include a cyclic or chain nonconjugated polyene. Examples of the cyclic nonconjugated polyene include cyclopentene, cycloheptene, norbornene, 5-ethylidene-2-norbornene, dicyclopentadiene, 5-vinyl-2-norbornene, norbornadiene, methyltetrahydroindene, and tetracyclododecene. Examples of the chain nonconjugated polyene include 1,4-hexadiene, 7-methyl-1,6-octadiene, 4-ethylidene-8-methyl-1,7-nonadiene, and 4-ethylidene-1,7-undecadiene. Among these, 5-ethylidene-2-norbornene, dicyclopentadiene, or 5-vinyl-2-norbornene is preferable. One of these cyclic or chain nonconjugated polyenes may be used singly, or two or more of them may be used in combination.

Specific examples of the ethylene-α-olefin-nonconjugated polyene random copolymer include an ethylene-propylene-diene terpolymer (EPDM).

Moreover, for the olefin polymer, a propylene-α-olefin-nonconjugated polyene copolymer, 1-butene-α-olefin-nonconjugated polyene copolymer, or the like can also be used.

Furthermore, for the olefin polymer, a 4-methyl-1-pentene-α-olefin copolymer can also be used. Specific examples of the 4-methyl-1-pentene-α-olefin copolymer include a polymer disclosed in WO2011/055803. The amount of structural units derived from 4-methyl-1-pentene in the 4-methyl-1-pentene-α-olefin copolymer is preferably 5 to 95mol%, and the amount of structural units derived from at least one or more α-olefins selected from C₂₋₂₀ α-olefins other than 4-methyl-1-pentene is preferably 5 to 95mol%. In addition, in a part of the 4-methyl-1-pentene-α-olefin copolymer, a nonconjugated polyene may be included, and the amount of structural units derived from the nonconjugated polyene is preferably 0 to 10mol%. Their total amount is 100mol%.

Note that there is no particular limitation on the tacticity of the olefin polymer, but when the olefin polymer is a propylene (co)polymer, it is preferable that the propylene (co)polymer have a substantially syndiotactic structure. For example, when the propylene (co)polymer has a substantially syndiotactic structure, the molecular weight between entanglement points (Me) becomes smaller and the number of entanglements in the molecule becomes larger at the same molecular weight. Therefore, the melt tension becomes larger and dripping becomes unlikely to occur. Moreover, when a molded product is produced using an electrically conductive resin composition including the propylene (co)polymer, the composition is likely to properly adhere to a metal mold for molding or a roller. Furthermore, when compared to a general isotactic polypropylene (co)polymer, the propylene (co)polymer having syndiotactic structure has a slower crystallization rate and thus cooling at a metal mold or on a roller becomes slower, thereby elevating the adhesiveness. As a result, it is assumed that the glossiness of the surface of the molded product is enhanced, and that the abrasion resistance, scratch resistance, impact resistance, or the like is enhanced.

Note that when the propylene (co)polymer has a substantially syndiotactic structure, this means a peak area corresponding to 19.5 to 20.3 ppm in the ¹³C-NMR spectrum accounts for 0.5% or more relative to the entire peak areas detected. When the syndiotacticity is within the range described above, the crystallization rate becomes sufficiently slow and the processability becomes very satisfactory. In addition, in the propylene (co)polymer in which structural units derived from propylene have a substantially syndiotactic structure, the abrasion resistance and scratch resistance are very satisfactory compared to polyethylene, block polypropylene, and isotactic polypropylene, which are general-purpose polyolefin resins. Note that the propylene (co)polymer having a syndiotactic structure can be produced by a variety of known production methods.

Here, when the thermoplastic resin (A) is the olefin polymer described above, an unmodified olefin polymer is preferable from the viewpoint that the shape of the carbon nanotube (B) is kept in the electrically conductive resin composition and a molded product having an excellent electrical conductivity is obtained. At this time, the acid number of the olefin polymer is preferably less than 1 mgKOHmg/g and the styrene amount is preferably 5mass% or less.

On the other hand, from the viewpoint of enhancing the heat resistance and mechanical strength of the electrically conductive resin composition (or a molded product thereof), the olefin polymer may be graft-modified with a polar compound including a double bond. When the olefin polymer is graft-modified, the affinity between the thermoplastic resin (A) and the carbon nanotube (B) is enhanced, and a molded product having an excellent heat resistance and mechanical strength is likely to be obtained.

Graft modification of the olefin polymer can be performed by known methods. The graft modification may be performed by a method in which the olefin polymer is dissolved in an organic solvent; to the resulting solution, a polar compound including a double bond such as unsaturated carboxylic acid and a radical polymerization initiator are then added; and the reaction is allowed at 60 to 350°C (preferably 80 to 190°C) for 0.5 to 15 hours (preferably 1 to 10 hours).

For the organic solvent described above, any organic solvent can be used without particular limitations as long as it can dissolve the olefin polymer. Examples of such an organic solvent include aromatic hydrocarbon solvents such as benzene, toluene, and xylene; and aliphatic hydrocarbon solvents such as pentane, hexane, and heptane.

In addition, as another method for graft modification, a method can be exemplified in which the olefin polymer and a polar compound including a double bond such as unsaturated carboxylic acid are allowed to react using an extruding machine, preferably without using any solvent in combination. In this case, the reaction temperature is preferably set to the melting point of the olefin polymer or higher, and specifically, it is preferably set to 100 to 350°C. It is preferable that the reaction time be normally 0.5 to 10 minutes.

It is preferable that the graft modification described above be conducted in the presence of a radical polymerization initiator in order to efficiently perform the graft copolymerization with a polar compound including a double bond. Examples of the radical polymerization initiator include organic peroxides and organic peresters (for example, benzoyl peroxide, dichlorobenzoyl peroxide, dicumyl peroxide, di-t-butyl peroxide, 2,5-dimethyl-2,5-di(peroxide benzoate)hexyne-3, 1,4-bis(t-butylperoxyisopropyl)benzene, lauroyl peroxide, t-butyl peracetate, 2,5-dimethyl-2,5-di(t-butylperoxy)hexyne-3, 2,5-dimethyl-2,5-di(t-butylperoxy)hexane, t-butyl perbenzoate, t-butyl perphenylacetate, t-butyl perisobutyrate, t-butyl per-sec-octoate, t-butyl perpivarate, cumyl perpivarate, and t-butyl perdiethylacetate), and azo compounds (for example, azobis(isobutyronitrile) and dimethyl azoisobutyrate).

Among these, dialkyl peroxides such as dicumyl peroxide, di-t-butyl peroxide, 2,5-dimethyl-2,5-di(t-butylperoxy)hexyne-3, 2,5-dimethyl-2,5-di(t-butylperoxy)hexane, and 1,4-bis(t-butylperoxyisopropyl)benzene are preferable. The radical polymerization initiator is normally used at a proportion of 0.001 to 1 part by mass relative to 100 parts by mass of the olefin polymer prior to the modification.

Note that the shape of the graft-modified olefin polymer is not particularly limited and it may be, for example, particulate. As an example of methods suitable for obtaining a particulate graft-modified olefin polymer, a method can be exemplified in which particles composed of one or two or more α-olefins selected from C₂₋₁₈ α-olefins and having a melting point of 50°C or more and less than 250°C, and monomers having an ethylenically unsaturated group and a polar functional group in the same molecule are subjected to graft reaction. The graft reaction can be carried out using the radical polymerization initiator mentioned above at a temperature of the melting point (Tm) of the olefin polymer particles or less. The average particle diameter of particles of the graft-modified olefin polymer may be, but is not limited to, for example, 0.2 mm to 2.5 mm. In addition, the melting point of the olefin polymer particles used for the preparation of the particulate graft-modified olefin polymer is normally 50°C or more and less than 250°C, but it is not limited to this range. The graft reaction described above can be carried out with no solvent, but it is preferably carried out in the presence of an organic solvent.

### (2) Polyamides

Examples of the polyamides include aliphatic polyamides such as Nylon 6, Nylon 66, Nylon 10, Nylon 11, Nylon 12, Nylon 46, Nylon 66, Nylon 610, and Nylon 612; and aromatic polyamides produced from an aromatic dicarboxylic acid and an aliphatic diamine. Among these, Nylon 6 is preferable.

### (3) Polyesters

Examples of the polyesters include aromatic polyesters such as polyethylene terephthalate, polyethylene naphthalate, and polybutylene terephthalate; polycaprolacton; polyhydroxybutyrate; and polyester elastomers. Among these, polyethylene terephthalate is preferable.

### (4) Polyacetals

Examples of the polyacetals include polyformaldehyde (polyoxymethylene), polyacetaldehyde, polypropionaldehyde, and polybutylaldehyde. Among these, polyformaldehyde is particularly preferable.

### (5) Styrene Resins

The styrene resin may be a homopolymer of styrene (polystyrene), or may be a bipolymer of styrene and acrylonitrile, methyl methacrylate, α-methyl styrene, or the like, for example, acrylonitrile-styrene copolymer. In addition, it may be an acrylonitrile-butadiene-styrene (ABS) resin, an acrylonitrile-acrylic rubber-styrene resin, an acrylonitrile-ethylene rubber-styrene resin, a (meth)acrylic acid ester-styrene resin, or various styrene elastomers.

It is preferable that the acrylonitrile-butadiene-styrene (ABS) resin contain 20 to 35mol% of structural units derived from acrylonitrile, 20 to 30mol% of structural units derived from butadiene, and 40 to 60mol% of structural units derived from styrene. The total of these structural units is 100mol%.

Moreover, for the styrene elastomer, known styrene elastomers having a polystyrene phase as a hard segment may also be used. Specific examples include styrene-butadiene copolymers (SBR), styrene-isoprene-styrene copolymers (SIS), styrene-butadiene-styrene copolymers (SBS), styrene-ethylene-butadiene-styrene copolymers (SEBS), and their hydrogenated products, styrene-isobutylene-styrene triblock copolymers (SIBS), and styrene-isobutylene diblock copolymers (SIB). Among these, styrene-isobutylene-styrene triblock copolymers (SIBS) and styrene-isobutylene diblock copolymers (SIB) are preferable.

### (6) Acrylic Resins

Examples of the acrylic resins include polymethacrylate and polyethyl methacrylate, and among these, polymethyl methacrylate (PMMA) is preferable.

### (7) Polycarbonates

Examples of the polycarbonates include polycarbonates obtained from bis(4-hydroxyphenyl)methane, 1,1-bis(4-hydroxyphenyl)ethane, 2,2-bis(4-hydroxyphenyl)propane, 2,2-bis(4-hydroxyphenyl)butane, and the like. Among these, a polycarbonate obtained from 2,2-bis(4-hydroxyphenyl)propane is preferable.

The melt flow rate (MFR) of the polycarbonate, measured in accordance with ISO 1133 at 300°C and with a load of 2.16 kg, is preferably 2 to 30 g/10 min and more preferably 5 to 20 g/10 min. When the MFR of the polycarbonate is within the range described above, the processability becomes satisfactory.

### (8) Polyphenylene Oxide

For polyphenylene oxide, poly(2,6-dimethyl-1,4-phenylene oxide) is preferable.

### (9) Chlorinated Resins

Examples of the chlorinated resins include polyvinyl chloride and polyvinylidene chloride. Polyvinyl chloride may be a homopolymer of vinyl chloride, or may be a copolymer of vinyl chloride and vinylidene chloride, acrylic acid ester, acrylonitrile, propylene, or the like. On the other hand, polyvinylidene chloride is a resin normally including 85% or more of vinylidene chloride units, and is for example, a copolymer of vinylidene chloride and vinyl chloride, acrylonitrile, (meth)acrylic acid ester, allyl ester, unsaturated ether, styrene, or the like. Alternatively, the chlorinated resin may be a vinyl chloride elastomer.

### (10) Vinyl Acetate Resins

Examples of the vinyl acetate resins include a homopolymer of vinyl acetate (polyvinyl acetate), and a copolymer of vinyl acetate and ethylene or vinyl chloride. Among these, an ethylene-vinyl acetate copolymer is preferable. In addition, modified ethylene-vinyl acetate copolymers such as saponified ethylene-vinyl acetate copolymers and graft-modified ethylene-vinyl acetate copolymers may be used as well.

### (11) Ethylene-(Meth)Acrylic Acid Ester Copolymers

For the ethylene-(meth)acrylic acid ester copolymer, ethylene-methyl acrylate copolymers, ethylene-ethyl acrylate copolymers, ethylene-methyl methacrylate copolymers, and ethylene-ethyl methacrylate copolymers are preferable.

### (12) Ethylene-(Meth)acrylic Acid Resins and Ionomer Resins Thereof

Ethylene-(meth)acrylic acid copolymers are copolymers of ethylene and various (meth)acrylic acids. These may be further salified with a metal to form a metal salt (ionomer). A metal element of the metal salt is preferably at least one selected from K, Na, Ca, and Zn. It is preferable that the metal element is K, Na, Ca, and Zn because modification is readily performed.

### (13) Vinyl Alcohol Resins

Examples of the vinyl alcohol resins include polyvinyl alcohol and ethylene-vinyl alcohol resins, and ethylene-vinyl alcohol resins are preferable. The ethylene-vinyl alcohol resin is obtained through hydrolysis of the copolymerized object of ethylene and vinyl acetate. The ethylene-vinyl alcohol resin not only has high gas barrier properties, oil resistance, and transparency of polyvinyl alcohol, but also has characteristics of the ethylene component such as moisture resistance and melt extrusion processability in combination.

### (14) Cellulose Resins

Examples of the cellulose resins include acetyl cellulose. In the case of using cellulose resins, by using a plasticizer such as dibutyl phthalate in combination, properties of a thermoplastic resin can be obtained.

### (15) Thermoplastic Elastomers

Examples of the thermoplastic elastomers include vinyl chloride elastomers, urethane elastomers, and polyester elastomers, and among these, urethane elastomers are preferable.

Examples of the urethane elastomers include thermoplastic polyurethane materials. The structure of the thermoplastic polyurethane material consists of a soft segment consisting of polymeric polyol (polymeric glycol) and a hard segment constituted by a chain extender and a diisocyanate.

Here, for the polymeric polyol to be a raw material, the same materials as known thermoplastic polyurethanes can be used. The polymeric polyol includes polyester-based ones and polyether-based ones. Among these, those based on polyether is more preferable in that a thermoplastic polyurethane material with a high modulus of repulsion elasticity and excellent, low temperature properties can be synthesized. Examples of the polyether polyol include polytetramethylene glycol and polypropylene glycol, and polytetramethylene glycol is particularly preferable regarding the modulus of repulsion elasticity and low temperature properties. In addition, the average molecular weight of the polymeric polyol is preferably 1,000 to 5,000, and in particular, for synthesizing a thermoplastic polyurethane material having a high repulsion elasticity, the average molecular weight is more preferably 2,000 to 4,000.

Meanwhile, for the chain extender, those used in conventional technologies relating to thermoplastic polyurethane materials can be used, and examples thereof include, but are not limited to, 1,4-butylene glycol, 1,2-ethylene glycol, 1,3-butanediol, 1,6-hexanediol, and 2,2-dimethyl-1,3-propanediol. The average molecular weight of these chain extenders is preferably 20 to 15,000.

For the diisocyanate, those used in conventional technologies relating to thermoplastic polyurethane materials can be used, and examples thereof include, but are not limited to, aromatic diisocyanates such as 4,4'-diphenylmethane diisocyanate, 2,4-toluene diisocyanate, and 2,6-toluene diisocyanate; and aliphatic diisocyanates such as hexamethylene diisocyanate. Among these, 4,4'-diphenylmethane diisocyanate, which is an aromatic diisocyanate, is particularly preferable.

For the urethane elastomer consisting of materials mentioned above, commercial products can be used suitably, and examples thereof include, for example, PANDEX T-8290, T-8295, and T8260 manufactured by DIC Bayer Polymer Ltd., and RESAMINE 2593 and 2597 manufactured by Dainichiseika Color & Chemicals Mfg. Co., Ltd.

### (16) Various Copolymerized Rubbers

The thermoplastic resin may be various rubbers other than the elastomers mentioned above. Examples of various copolymerized rubbers include polybutadiene rubbers, polyisoprene rubbers, neoprene rubbers, nitrile rubbers, butyl rubbers, halogenated butyl rubbers, polyisobutylene rubbers, natural rubbers, and silicone rubbers. One of these rubbers may be used singly, or two or more of them may be used in combination.

Note that, among the thermoplastic resins (1) to (16) mentioned above, the thermoplastic resin (A) is preferably at least one resin selected from the group consisting of (1) olefin polymers (also including acid-graft-modified objects thereof), (5) styrene resins, (7) polycarbonates, (9) chlorinated resins, (12) ethylene-acrylic acid resins, ethylene-methacrylic acid resins, and ionomer resins thereof, (15) thermoplastic elastomers, and (16) various copolymerized rubbers. Moreover, it is more preferably at least one resin selected from the group consisting of olefin polymers, polystyrene, acrylonitrile-butadiene-styrene copolymerized resins (ABS resins), polyvinyl chloride, and polycarbonates; it is further preferably selected from ethylene (co)polymers such as polyethylene, propylene (co)polymers such as polypropylene, poly(1-butene), poly(4-methyl-1-pentene), polyvinyl chloride, polystyrene, acrylonitrile-butadiene-styrene copolymers, and a polycarbonate obtained from 2,2-bis(4-hydroxyphenyl)propane; and it is particularly preferably an ethylene (co)polymer, a propylene (co)polymer, or a polycarbonate.

When an ethylene (co)polymer or a propylene (co)polymer is used as the thermoplastic resin (A), upon molding and processing of an electrically conductive resin composition, fuming, odor, and the like are little and the operation environment is likely to be satisfactory. Moreover, a satisfactory molded product with little scorch can be obtained. Note that the ethylene (co)polymer is excellent in low temperature properties and processability, and the propylene (co)polymer is excellent in heat resistance and stiffness. Also, when using the polycarbonate, it becomes easier to apply the electrically conductive resin composition to various applications.

### 1-1-2. Physical Properties of Thermoplastic Resin (A)

The ratio (Mw/Mn) between the weight average molecular weight (Mw) and the number average molecular weight (Mn), measured by gel permeation chromatography (GPC) for the thermoplastic resin (A), is preferably 6.0 or less. The Mw/Mn is more preferably 4.0 or less and further preferably 3.0 or less. When the Mw/Mn is included within the range described above, the amount of low molecular weight components, which cause deterioration of physical properties, is small, thereby achieving an excellent appearance, heat resistance, and mechanical strength. Furthermore, the amount of high molecular weight objects, which cause increase in melt viscosity upon kneading, is small, thereby achieving an excellent processability. Note that both weight average molecular weight (Mw) and number average molecular weight (Mn) are determined in terms of polystyrene.

It is preferable that the melting point (Tm) of the thermoplastic resin (A), measured by a differential scanning calorimetry (DSC), be 250°C or less, or not observed. When the melting point is observed, the upper limit of the melting point is more preferably 230°C, further preferably 200°C, and particularly preferably 170°C. In addition, the lower limit of the melting point is preferably 50°C, more preferably 70°C, further preferably 90°C, particularly preferably 130°C, and more preferably 150°C. When the melting point is within the range described above, upon preparation of an electrically conductive resin composition through melt kneading and upon production of a molded product through melt molding, fuming, odor, and the like are unlikely to occur. Moreover, a molded product in which stickiness is unlikely to occur and with an excellent balance among the heat resistance, mechanical strength, impact strength, and impact absorption can be obtained.

The glass transition temperature (Tg) of the thermoplastic resin (A), measured by a differential scanning calorimetry (DSC), is preferably within the range of -140°C to 50°C, more preferably -120°C to 20°C, and further preferably -100°C to -10°C. When the glass transition temperature is within the range described above, the molded product to be obtained will have a satisfactory balance among the long term stability, heat resistance, impact resistance, and mechanical strength.

The density of the thermoplastic resin (A), measured in accordance with ISO 1183 and following density gradient tube method, is preferably within the range of 800 to 1,800 kg/m³. The lower limit of the density of the resin (A) is more preferably 810 kg/m³, further preferably 830 kg/m³, particularly preferably 860 kg/m³, and further more preferably 900 kg/m³. In addition, the upper limit of the density of the resin (A) is more preferably 1,300 kg/m³, further preferably 1,290 kg/m³, particularly preferably 1,270 kg/m³, further more preferably 1,240 kg/m³, and even further preferably 1,200 kg/m³.

The bending elastic modulus of the thermoplastic resin (A), measured in accordance with JIS K7171:94 (ISO 178), is preferably 1 to 10,000 MPa. Here, when the bending elastic modulus described above is 500 MPa or more, the bending elastic modulus is preferably 500 to 7,000 MPa, more preferably 700 to 5,000 MPa, particularly preferably 900 to 3,000 MPa, and further preferably 1,000 to 2,300 MPa. When the bending elastic modulus falls within the range described above, not only is the processability of the electrically conductive resin composition excellent, but also the scratch resistance, heat resistance, and mechanical strength of the molded product to be obtained are satisfactory. In addition, when the bending elastic modulus described above is less than 500 MPa, it is preferably less than 300 MPa, more preferably less than 100 MPa, and further preferably less than 50 MPa. When the bending elastic modulus is within the range described above, a molded product not only having an excellent flexibility, but also having an excellent shock absorption, lightness, vibration resistance, damping properties, and sound control properties can be obtained. Furthermore, a molded product having excellent designable properties such as metal mold transferability and grain transferability, and surface gripping properties can be obtained.

### 1-2. Carbon Nanotube (B)

The carbon nanotube may be a tubular carbon isotope with an outer diameter (diameter) of 100 nm or less. The outer diameter of the carbon nanotube (B) is more preferably 70 nm or less, further preferably 50 nm or less, and particularly preferably 30 nm or less. When the outer diameter of the carbon nanotube (B) is 100 nm or less, the carbon nanotube (B) is likely to form a network structure in the electrically conductive resin composition, and the electrical conductivity is likely to be enhanced. On the other hand, when the outer diameter of the carbon nanotube (B) is 1 nm or more, dispersion of the carbon nanotube (B) tends to be easier.

In addition, the fiber length of the carbon nanotube (B) is preferably 3 to 500 µm, more preferably 5 to 300 µm, further preferably 7 to 100 µm, and particularly preferably 9 to 50 µm. When the fiber length is 3 µm or more, the carbon nanotube (B) is likely to form a network structure in the electrically conductive resin composition, and the electrical conductivity is likely to become sufficient. On the other hand, when the fiber length is 500 µm or less, the dispersibility of the carbon nanotubes (B) is likely to be satisfactory. Note that the outer diameter and fiber length of the carbon nanotube (B) can be determined by measuring the length and outer diameter of 100 carbon nanotubes using electron microscopy (SEM) and calculating the average values thereof, respectively.

In addition, the aspect ratio (fiber length/outer diameter) of the carbon nanotube (B) is preferably 30 to 50,000, more preferably 50 to 30,000, and further preferably 100 to 20,000. When the aspect ratio of the carbon nanotubes (B) is within the range described above, the dispersibility is likely to be satisfactory.

The shape of the carbon nanotube (B) may be any shape as long as it is tubular, and may be, for example, needle-shaped, cylindrical tubular, fishbone-shaped (fish bone, cup-laminated), trump-shaped (platelet), coil-shaped, or the like. Also, the carbon nanotube (B) can be graphite whisker, filamentous carbon, graphite fiber, ultrafine carbon tube, carbon fibril, carbon nanofiber, or the like. Among the above, the shape of the carbon nanotube (B) is preferably cylindrical tubular.

The cylindrical tubular carbon nanotube (B) has a structure formed by winding one or more layers of graphite into a cylindrical shape. The cylindrical tubular carbon nanotube (B) may be a single-walled carbon nanotube in which only one graphite layer is wound, or it may be a multi-walled carbon nanotube in which two or more graphite layers are wound. Alternatively, these structures may be present in a mixed form. However, the multi-walled carbon nanotube is preferable from the perspective of costs. Also, the sides of the carbon nanotube may be an amorphous structure instead of a graphite structure.

Moreover, the carbon nanotube (B) may be subjected to various surface treatments, and may be a carbon nanotube derivative with functional groups such as carboxyl groups introduced to its surface. It can also be a carbon nanotube encapsulating an organic compound, metal atom, fullerene, or the like.

Here, it is preferable that the carbon nanotube (B) have a high purity of carbon, and the amount of carbon in 100mass% of the carbon nanotube (B) (hereinafter, also referred to as the "carbon purity") is preferably 85mass% or more, more preferably 90mass% or more, and further preferably 95mass% or more. When the carbon purity is 85mass% or more, the electrical conductivity of the electrically conductive resin composition is likely to be enhanced.

The carbon nanotube (B) may be present as a secondary particle in the electrically conductive resin composition. The shape of the secondary particle may be at a state where carbon nanotubes, which are primary particles, are complicatedly entangled, or it may be at a state where linear carbon nanotubes are aggregated. Among these, the state where linear carbon nanotubes are aggregated is preferable from the viewpoint that the electrical conductivity of the electrically conductive resin composition is more likely to become satisfactory.

The carbon nanotube (B) described above can be produced by known methods, such as laser ablation method, arc discharge method, thermal CVD method, plasma CVD method, and combustion method. However, the thermal CVD method using zeolite as the support for the catalyst and acetylene as the raw material is preferable from the viewpoint that no purification is required and carbon nanotubes with a high purity can be efficiently produced.

The carbon nanotube (B) may be a commercial product. Examples of the commercial product include K-Nanos 100P, 100T, and 200P (all manufactured by Kumho Petrochemical Co., Ltd.), FloTube 9000 and 9100 (both manufactured by CNano Technology), and NC7000 (manufactured by Nanocyl SA).

### 1-3. Aromatic Monomer-Modified Polyolefin Wax (C)

The aromatic monomer-modified polyolefin wax (C) is different from the thermoplastic resin (A) described above.

As previously mentioned, when the carbon nanotube (B) is just simply incorporated to the thermoplastic resin (A), which is the base of the electrically conductive resin composition, the dispersibility of the thermoplastic resin (A) and the carbon nanotube (B) may be poor, thereby not enabling a uniform kneading. In particular, when the amount of the carbon nanotube (B) incorporated is large relative to the thermoplastic resin (A) or when the specific surface area of the carbon nanotube (B) is big, dispersion is often hard due to viscosity increase upon kneading. As such, upon molding of an electrically conductive resin composition, processability is likely to be deteriorated or uniformity of the molded product is likely to be insufficient. As a result, there have been cases where a sufficient electrical conductivity is not obtained, and furthermore, there occurs a problem in the appearance of the molded product to be obtained and the heat resistance, mechanical strength, and flexibility (elongation) are not sufficient.

In contrast to this, according to considerations of the present inventors, it has been revealed that, by incorporating the aromatic monomer-modified polyolefin wax (C), which is obtained by modifying a polyolefin wax with an aromatic monomer, upon kneading of the thermoplastic resin (A) and the carbon nanotube (B), an electrically conductive resin composition with satisfactory electrical conductivity, appearance, heat resistance, mechanical strength, flexibility, and processability can be obtained.

Although detailed mechanisms for this are not clear, the presence of an aromatic structure in the molecular chain of the aromatic monomer-modified polyolefin wax (C) causes the aromatic structure to electrically interact with double bonds present in the molecule of the carbon nanotube (B), thereby enhancing the affinity therebetween. In addition, the aromatic monomer-modified polyolefin wax (C) has high affinity with various thermoplastic resins, and for example, even when the thermoplastic resin (A) is a polar resin, its compatibility is satisfactory. Accordingly, the carbon nanotube (B) is likely to be uniformly dispersed in the thermoplastic resin (A), and friction during their kneading is reduced. Then, it is assumed that the flowability of the electrically conductive resin composition is elevated. Also, as the flowability of the electrically conductive resin composition is elevated, the processability is elevated and the appearance of the molded product also becomes satisfactory. Furthermore, due to the elevation of the flowability of the electrically conductive resin composition, destruction of the structure of the carbon nanotube (B) or its aggregate is less likely to occur, thus making it easier to obtain a sufficient electrical conductivity.

### 1-3-1. Physical Properties of Aromatic Monomer-Modified Polyolefin Wax (C)

Here, it is preferable that the aromatic monomer-modified polyolefin wax (C) satisfy the following requirements (i) to (iv), and it is more preferable that the aromatic monomer-modified polyolefin wax (C) also satisfy requirements (v) and (vi).

(i) The number average molecular weight (Mn) in terms of polystyrene, measured by gel permeation chromatography (GPC) for the aromatic monomer-modified polyolefin wax (C), preferably ranges from 300 to 10,000. The upper limit of the number average molecular weight (Mn) is more preferably 8,000, further preferably 5,000, particularly preferably 4,000, and further more preferably 3,000. In addition, the lower limit of the number average molecular weight (Mn) is more preferably 200, further preferably 300, particularly preferably 400, and further more preferably 500. When the number average molecular weight of the aromatic monomer-modified polyolefin wax (C) is within the range described above, the dispersibility of the carbon nanotube (B) in the electrically conductive resin composition is enhanced and the electrical conductivity, appearance, and mechanical strength of the molded product to be obtained become satisfactory. Moreover, the processability of the electrically conductive resin composition also becomes satisfactory.

The number average molecular weight (Mn) of the aromatic monomer-modified polyolefin wax (C) is lowered when the polymerization temperature is raised during the polymerization of an unmodified polyolefin wax, which will be mentioned later, or when the hydrogen concentration is raised at that time. It may also be adjusted through the amount of catalyst used during the polymerization of the unmodified polyolefin wax or by purification after the polymerization.

(ii) The ratio (Mw/Mn) between the weight average molecular weight (Mw) and the number average molecular weight (Mn), measured by gel permeation chromatography (GPC) for the aromatic monomer-modified polyolefin wax (C), is preferably 9.0 or less. The ratio is more preferably 8.0 or less and further preferably 7.0 or less. When the Mw/Mn is included within the range described above, the amount of low molecular weight components, which cause deterioration of physical properties, is small, and therefore, the appearance, heat resistance, mechanical strength, and the like of the molded product to be obtained from the electrically conductive resin composition become satisfactory. Note that the weight average molecular weight (Mw) is also a value in terms of polystyrene.

The Mw/Mn of the aromatic monomer-modified polyolefin wax (C) can be adjusted through catalyst species, polymerization temperature, or the like during the polymerization of the unmodified polyolefin wax. In general, a Ziegler-Natta catalyst or a metallocene catalyst is used for the polymerization of the unmodified polyolefin wax, but in order to achieve the desired Mw/Mn, it is preferable to use a metallocene catalyst. Note that the Mw/Mn of the aromatic monomer-modified polyolefin wax (C) can also be adjusted through purification of the unmodified polyolefin wax.

(iii) The softening point of the aromatic monomer-modified polyolefin wax (C) measured in accordance with JIS K2207 preferably ranges from 70 to 170°C. The upper limit of the softening point is more preferably 160°C, further preferably 150°C, and particularly preferably 145°C. In addition, the lower limit is more preferably 80°C, further preferably 90°C, particularly preferably 95°C, and further more preferably 105°C. When the softening point is at the upper limit described above or less, the processability of the electrically conductive resin composition, as well as the appearance, heat resistance, and mechanical strength of the molded product to be obtained, becomes satisfactory. When the softening point is at the lower limit described above or more, in the electrically conductive resin composition to be obtained, the bleed out of the aromatic monomer-modified polyolefin wax (C) is likely to be suppressed.

The softening point of the aromatic monomer-modified polyolefin wax (C) can be adjusted through the composition of unmodified polyolefin wax. For example, in the case where the unmodified polyolefin wax, which will be mentioned later, is a copolymer of ethylene and an α-olefin, the softening point can be lowered by increasing the content of the α-olefin. The softening point described above may also be adjusted through the catalyst species or polymerization temperature during the preparation of the unmodified polyolefin wax or through purification after the polymerization.

(iv) The density of the aromatic monomer-modified polyolefin wax (C), measured in accordance with JIS K7112 and with density gradient tube method, preferably ranges from 830 to 1,200 kg/m³. The density is more preferably 860 to 1,100 kg/m³ and further preferably 890 to 1,000 kg/m³. When the density of the aromatic monomer-modified polyolefin wax (C) is within the range described above, the dispersibility of the carbon nanotube (B) is enhanced and the electrical conductivity, appearance, and mechanical strength of the molded product to be obtained become satisfactory. Moreover, the processability of the electrically conductive resin composition also becomes satisfactory.

The density of the aromatic monomer-modified polyolefin wax (C) can be adjusted through the composition of the unmodified polyolefin wax, which will be mentioned later, or through the polymerization temperature, hydrogen concentration, or the like during the polymerization.

(v) The melt viscosity of the aromatic monomer-modified polyolefin wax (C), measured at 140°C, with a B-type viscometer, and at a rotor speed of 60 rpm, is preferably 2,000 mPa·s or less, more preferably 100 to 2,000 mPa·s, further preferably 200 to 1,500 mPa·s, and further more preferably 300 to 1,200 mPa·s. When the melt viscosity of the aromatic monomer-modified polyolefin wax (C) at 140°C is within the range described above, the processability of the electrically conductive resin composition is likely to become satisfactory.

Furthermore, (vi) the viscosity average molecular weight (Mv) of the aromatic monomer-modified polyolefin wax (C), determined by measuring the limiting viscosity [η] and substituting it into the Mark-Kuhn-Houwink equation, is preferably 350 to 2,000, more preferably 600 to 2,000, and further preferably 700 to 1,800. As the viscosity average molecular weight (Mv) of the aromatic monomer-modified polyolefin wax (C) becomes lower, the dispersibility of the carbon nanotube (B) is likely to be enhanced and the electrical conductivity of the electrically conductive resin composition is likely to be enhanced.

### 1-3-2. Structure of and Method of Producing Aromatic Monomer-Modified Polyolefin Wax (C)

The aromatic monomer-modified polyolefin wax (C) may be any compound as long as it is obtained by modifying a polyolefin wax with an aromatic monomer, but it is preferably an aromatic monomer-modified product of a homopolymer or a copolymer of at least one selected from ethylene and C₃₋₁₂ α-olefins. Particularly preferably, the aromatic monomer-modified polyolefin wax (C) is a styrene-modified product of a copolymer of ethylene and at least one α-olefin selected from C₃₋₁₂ α-olefins.

The aromatic monomer-modified polyolefin wax (C) is obtained by modifying an unmodified propylene wax with an aromatic monomer (for example, styrenes). Hereinafter, the unmodified polyolefin wax and a preparation method thereof will be described first, and then, the aromatic monomer-modified polyolefin wax (C) obtained by modifying it with an aromatic monomer and a preparation method thereof will be described.

### (Unmodified Polyolefin Wax)

As mentioned above, the unmodified polyolefin wax is preferably a homopolymer or a copolymer of at least one selected from ethylene and C₃₋₁₂ α-olefins. Examples of C₃₋₁₂ α-olefins include C₃ propylene, C₄ 1-butene, C₅ 1-pentene, C₆ 1-hexene and 4-methyl-1-pentene,and C₈ 1-octene, and propylene, 1-butene, 1-hexene, and 4-methyl-1-pentene are preferable. The unmodified polyolefin wax may consist of a single polymer, or may be two or more polymers that have been mixed.

Hereinafter, as specific examples of the unmodified polyolefin wax, polyethylene waxes, polypropylene waxes, and 4-methyl-1-pentene waxes will be described, but the unmodified polyolefin wax is not limited to them.

### · Polyethylene Wax

When the unmodified polyolefin wax is a polyethylene wax, the polyethylene wax described in Japanese Patent Application Laid-Open No. 2009-144146 and the like is preferable. It will be briefly described hereinafter.

The polyethylene wax can be, for example, an ethylene homopolymer or a copolymer of ethylene and a C₃₋₁₂ α-olefin. Specific examples of the ethylene homopolymer include high density polyethylene waxes, medium density polyethylene waxes, low density polyethylene waxes, and linear low density polyethylene waxes.

On the other hand, when the polyethylene wax is a copolymer of ethylene and a C₃₋₁₂ α-olefin, the amount (a) of structural units derived from ethylene is preferably 91.0 to 99.9mol%, more preferably 93.0 to 99.9mol%, further preferably 95.0 to 99.9mol%, and particularly preferably 95.0 to 99.0mol%. Meanwhile, the amount (b) of structural units derived from the α-olefin having 3 or more carbon atoms is preferably 0.1 to 9.0mol%, more preferably 0.1 to 7.0mol%, further preferably 0.1 to 5.0mol%, and particularly preferably 1.0 to 5.0mol%. Note that (a) + (b) = 100mol%. The proportion of structural units in the polyethylene wax can be determined through analysis of the ¹³C-NMR spectrum.

Examples of the C₃₋₁₂ α-olefin to be copolymerized with ethylene include linear or branched α-olefins such as propylene, 1-butene, 1-pentene, 3-methyl-1-butene, 1-hexene, 4-methyl-1-pentene, 3-methyl-1-pentene, 1-octene, 1-decene, and 1-dodecene, and it is preferably propylene, 1-butene, 1-hexene, 4-methyl-1-pentene, or 1-octene, more preferably a C₃₋₈ α-olefin, particularly preferably propylene or 1-butene, and further preferably propylene. When ethylene and propylene or 1-butene are copolymerized, the aromatic monomer-modified polyolefin wax (C) tends to become hard, thereby reducing stickiness. Therefore, the surface properties of the molded product to be obtained become satisfactory. In addition, this is preferable from the viewpoint of enhancing the mechanical strength or heat resistance of the molded product to be obtained. The reason behind this is not clear, but propylene and 1-butene efficiently lower the melting point even with a small amount of copolymerization compared to other α-olefins. Therefore, the crystallinity tends to become higher when compared at the same melting point, which is assumed to be a contributing factor for the above. For the α-olefin to be copolymerized with ethylene, one α-olefin may be used singly, or two or more α-olefins may be used in combination.

The polyethylene wax described above is suitably used, in particular, when the thermoplastic resin (A) is a polyolefin resin. When these are combined, the compatibility between the thermoplastic resin (A) and the aromatic monomer-modified polyolefin wax (C) is enhanced, and balance among the appearance, processability, mechanical strength, and heat resistance of the molded product to be obtained becomes satisfactory. The polyethylene wax is also suitably used when the thermoplastic resin (A) is a polycarbonate. In this case, moderate compatibility between the thermoplastic resin (A) (polycarbonate) and the polyethylene wax is likely to make the processability of the electrically conductive resin composition, as well as balance among the release properties from the metal mold, mechanical strength, and the like of the molded product to be obtained, satisfactory.

### · Polypropylene Wax

The unmodified polyolefin wax may be a polypropylene wax. The polypropylene wax may be a propylene homopolymer, a copolymer of propylene and ethylene, or a copolymer of propylene and a C₄₋₁₂ α-olefin.

When propylene and ethylene are copolymerized, the amount of structural units derived from propylene is preferably 60 to 99.5mol%. The amount of structural units derived from propylene is more preferably 80 to 99mol%, further preferably 90 to 98.5mol%, and particularly preferably 95 to 98mol%. When such a polypropylene wax is used, a molded product with an excellent balance among the appearance, mechanical strength, and heat resistance is likely to be obtained.

When the polypropylene wax is a compound obtained by copolymerizing propylene and a C₄₋₁₂ α-olefin, examples of the C₄₋₁₂ α-olefin include linear or branched α-olefins such as 1-butene, 1-pentene, 3-methyl-1-butene, 1-hexene, 4-methyl-1-pentene, 3-methyl-1-pentene, 1-octene, 1-decene, and 1-dodecene. Among these, 1-butene is particularly preferable.

When the polypropylene wax is a propylene-α-olefin copolymer, the amount (a') of structural units derived from propylene is preferably 60 to 90mol%, more preferably 65 to 88mol%, further preferably 70 to 85mol%, and particularly preferably 75 to 82mol%. Meanwhile, the amount (b') of structural units derived from the α-olefin having 4 or more carbon atoms is preferably 10 to 40mol%, more preferably 12 to 35mol%, further preferably 15 to 30mol%, and particularly preferably 18 to 25mol%. Note that (a') + (b') = 100mol%.

Such a polypropylene wax is suitably used, in particular, when the thermoplastic resin (A) is a polypropylene resin. When these are combined, the compatibility between the thermoplastic resin (A) and the aromatic monomer-modified polyolefin wax (C) is enhanced, and balance among the appearance, mechanical strength, and heat resistance of the molded product to be obtained becomes satisfactory. Moreover, the processability of the electrically conductive resin composition also becomes satisfactory.

### · 4-Methyl-1-Pentene Wax

Suitable examples of the unmodified polyolefin wax include those obtained by thermally decomposing a 4-methyl-1-pentene-α-olefin copolymer described in WO2011/055803, or a 4-methyl-1-pentene polymer described in Japanese Patent Application Laid-Open No. 2015-028187.

### · Method of Preparing Unmodified Polyolefin Wax

The unmodified polyolefin wax mentioned above may be those obtained by directly polymerizing ethylene, propylene, 4-methyl-1-pentene, or the like, or may be obtained by providing a (co)polymer with a high molecular weight and thermally decomposing it. When thermal decomposition is performed, it is preferably performed at 300 to 450°C for 5 minutes to 10 hours. In this case, unsaturated terminals occur in the unmodified polyolefin wax. When the number of vinylidene groups (unsaturated terminals) per 1,000 carbon atoms is 0.5 to 5, as measured by ¹H-NMR, the affinity between the aromatic monomer-modified polyolefin wax (C) and the carbon nanotube (B) is likely to be enhanced. Note that the unmodified polyolefin wax may be purified by methods such as solvent fractionation, in which fractionation is performed based on the difference in solubilities in a solvent, or distillation.

On the other hand, when the unmodified polyolefin wax is obtained by directly polymerizing ethylene, propylene, 4-methyl-1-pentene,or the like, the method therefor is not limited. A variety of known production methods can be applied. For example, ethylene or the like may be polymerized using a Ziegler/Natta catalyst or a metallocene catalyst.

### (Aromatic Monomer-Modified Polyolefin Wax (C))

The aromatic monomer-modified polyolefin wax (C) is obtained by modifying the unmodified polyolefin wax mentioned above with various aromatic monomers.

The aromatic monomer that modifies the unmodified polyolefin wax mentioned above is preferably a compound having an aromatic ring and an unsaturated double bond. Specific examples thereof include styrene monomers such as styrene, α-methylstyrene, o-methylstyrene, p-methylstyrene, m-methylstyrene, p-chlorostyrene, m-chlorostyrene, and p-chloromethylstyrene; pyridine monomers such as 4-vinylpyridine, 2-vinylpyridine, 5-ethyl-2-vinylpyridine, 2-methyl-5-vinylpyridine, and 2-isopropenylpyridine; quinoline monomers such as 2-vinylquinoline and 3-vinylisoquinoline; N-vinylcarbazole; and N-vinylpyrrolidone. Among these, styrene monomers are particularly preferable, and in particular, styrene is preferable.

When the mass of the aromatic monomer-modified polyolefin wax (C) is set to be 100 parts by mass, the amount of structural units derived from the aromatic monomer in the aromatic monomer-modified polyolefin wax (C) is preferably 5 to 95 parts by mass, more preferably 10 to 90 parts by mass, further preferably 15 to 80 parts by mass, and particularly preferably 20 to 70 parts by mass. When the amount of structural units derived from the aromatic monomer in the aromatic monomer-modified polyolefin wax (C) is within the range described above, the compatibility between the aromatic monomer-modified polyolefin wax (C) and the carbon nanotube (B) becomes satisfactory and an excessive interaction causing increased viscosity or the like is suppressed as well. Accordingly, the processability of the electrically conductive resin composition becomes satisfactory, and furthermore, balance among the appearance, heat resistance, and mechanical strength of the molded product to be obtained becomes satisfactory. The amount of structural units derived from the aromatic monomer is calculated from the amount of the aromatic monomer added during the modification. It can also be specified by extracting the aromatic monomer-modified polyolefin wax (C) using gel permeation chromatography (GPC) or the like, and further analyzing the extracted aromatic monomer-modified polyolefin wax (C) by NMR or the like.

### · Method of Preparing Aromatic Monomer-Modified Polyolefin Wax (C)

The method of preparing the aromatic monomer-modified polyolefin wax (C), that is, the method of modification with the aromatic monomer, is not particularly limited. For example, it may be a method in which the unmodified polyolefin wax, which is the raw material, and the aromatic monomer (for example, styrene or the like) are melt kneaded in the presence of a polymerization initiator such as an organic peroxide. Alternatively, it may be a method in which a polymerization initiator such as an organic peroxide is added to a solution obtained by dissolving the unmodified polyolefin wax, which is the raw material, and the aromatic monomer (for example, styrene or the like) in an organic solvent, and the mixture is melt kneaded.

For the melt kneading, known apparatuses such as an autoclave, Henschel mixer, V-blender, tumbler blender, ribbon blender, single screw extruding machine, multi-screw extruding machine, kneader, and Banbury mixer can be used. Among these, when an apparatus excellent in the batch melt kneading performance such as an autoclave is used, an aromatic monomer-modified polyolefin wax (C) can be obtained in which all components have been uniformly dispersed and allowed to react. In addition, when compared to continuous processing, batch processing is preferable from the viewpoint that the retention time can be readily adjusted and the retention time can be extended as well, making it relatively easy to enhance the modification rate and the modification efficiency.

Note that, after the unmodified polyolefin wax is modified with the aromatic monomer, it may be processed to conform to the production method for the electrically conductive resin composition. For example, the aromatic monomer-modified polyolefin wax (C) may be processed into the shape of powder, tablet, or block. On the other hand, the aromatic monomer-modified polyolefin wax (C) may be dispersed or dissolved in water or an organic solvent. The method of dissolving or dispersing the aromatic monomer-modified polyolefin wax (C) in water or an organic solvent is not particularly limited. For example, the aromatic monomer-modified polyolefin wax (C) may be dissolved or dispersed by stirring. Also, it may be heated while stirring.

Furthermore, the aromatic monomer-modified polyolefin wax (C) may be formed into fine particles by dissolving or dispersing it in water or an organic solvent and then precipitating it. Examples of the method of forming the aromatic monomer-modified polyolefin wax (C) into fine particles include the following method. At first, the solvent composition is adjusted such that the aromatic monomer-modified polyolefin wax (C) is precipitated at 60 to 100°C. Then, the mixture of the solvent and the aromatic monomer-modified polyolefin wax (C) is heated to dissolve or disperse the aromatic monomer modified polyolefin wax (C) in the solvent. The solution is then cooled at an average cooling rate of 1 to 20°C/hour (preferably 2 to 10°C/hour) to precipitate the aromatic monomer-modified polyolefin wax (C). After this, a poor solvent may also be added to further accelerate the precipitation.

### 1-4. Optional Components

Optional components may be included in the electrically conductive resin composition of the present invention to the extent where the objects and effects of the present invention are not impaired. Examples of the optional components include flame retardants such as brominated bisphenols, brominated epoxy resins, brominated polystyrenes, brominated polycarbonates, triphenyl phosphate, phosphonic amide, and red phosphorus; flame retardant auxiliaries such as antimony trioxide and sodium antimonate; thermal stabilizers such as phosphoric acid esters and phosphorous acid esters; oxidation inhibitors such as hindered phenol; heat resistant agents; weathering agents; photostabilizers; mold releasing agents; flowability modifying agents; coloring agents; lubricants; antistatic agents; nucleating agents; plasticizing agents; and blowing agents.

The content of optional components in the electrically conductive resin composition is preferably 30 parts by mass or less, more preferably 20 parts by mass or less, and particularly preferably 10 parts by mass or less relative to 100 parts by mass of the total of the thermoplastic resin (A) and the carbon nanotube (B).

### 2. Method of Producing Electrically Conductive Resin Composition

The electrically conductive resin composition of the present invention can be produced utilizing various methods. For example, it may be produced by a method in which the thermoplastic resin (A), the carbon nanotube (B), the aromatic monomer-modified polyolefin wax (C), and other optional components are mixed simultaneously or in an arbitrary order with a tumbler, V-blender, nauta mixer, Banbury mixer, kneading roller, single or twin screw extruding machine, or the like.

Alternatively, after impregnating the carbon nanotube (B) with the aromatic monomer-modified polyolefin wax (C), they may be mixed with the thermoplastic resin (A). The method of impregnating the carbon nanotube (B) with the aromatic monomer-modified polyolefin wax (C) is not particularly limited. For example, a method of applying tension to the carbon nanotube (B) with a roller or bar, of repeating widening and bundling of the carbon nanotube (B), or of applying pressure or vibration to the carbon nanotube (B), at a state where the molten aromatic monomer-modified polyolefin wax (C) is in contact with the carbon nanotube (B), can be exemplified. According to these methods, the aromatic monomer-modified polyolefin wax (C) can be impregnated into the inside of the carbon nanotube (B).

The impregnation method may be a method in which the carbon nanotube (B) is brought into contact with the surface of a plurality of heated rollers or bars, and is then brought into contact with the aromatic monomer-modified polyolefin wax (C) at a state where the carbon nanotube (B) is widened. Also, in particular, the method of impregnating the carbon nanotube (B) with the aromatic monomer-modified polyolefin wax (C) using a squeezing cap, squeezing roller, roller press, or double belt press is suitable. Note that, since the present invention uses the aromatic monomer-modified polyolefin wax (C), even when such an impregnation operation is carried out, the aromatic monomer-modified polyolefin wax (C) is likely to easily enter the inside of the carbon nanotube (B), and the operation can be efficiently performed in a short time.

Alternatively, the electrically conductive resin composition of the present invention may be produced via providing a masterbatch including the thermoplastic resin (A), the carbon nanotube (B), and the aromatic monomer-modified polyolefin wax (C) and melt kneading the masterbatch, the thermoplastic resin (A), and, as necessary, the carbon nanotube (B) or the aromatic monomer-modified polyolefin wax (C).

In the masterbatch, the thermoplastic resin (A), the carbon nanotube (B), and the aromatic monomer-modified polyolefin wax (C) are included. In the electrically conductive resin composition of the present invention, there are some cases where a uniform dispersion of the carbon nanotube (B) in the thermoplastic resin (A) is hard. Accordingly, after preparing a masterbatch including the thermoplastic resin (A), the carbon nanotube (B), and the aromatic monomer-modified polyolefin wax (C), the masterbatch and the thermoplastic resin (A) are further mixed, thereby achieving a uniform dispersion. By producing the masterbatch, it becomes easier to cover the carbon nanotube (B) with the aromatic monomer-modified polyolefin wax (C), and the carbon nanotube (B) becomes unlikely to protrude from the surface of the electrically conductive resin composition (and eventually, molded product). Therefore, the surface glossiness of the molded product to be obtained is enhanced and the aesthetics and designable properties of the molded product are improved. In addition, as it becomes easier to cover the carbon nanotube (B) with the aromatic monomer-modified polyolefin wax (C), the mechanical strength and heat resistance are improved.

The content mass ratio (carbon nanotube (B)/aromatic monomer-modified polyolefin wax (C)) between the carbon nanotube (B) and the aromatic monomer-modified polyolefin wax (C) in the masterbatch is preferably 0.1 to 30, more preferably 1 to 25, and further preferably 2 to 20. When the content mass ratio is 30 or less, since the proportion of the carbon nanotube (B) is not relatively too high, the aggregated structure of the carbon nanotube (B) is unlikely to be destroyed upon production of the masterbatch. As a result, a sufficient electrical conductivity can be obtained when the electrically conductive resin composition and the molded product are produced. In addition, when the content mass ratio is 0.1 or more, since the proportion of the aromatic monomer-modified polyolefin wax (C) is not relatively too high, the melt viscosity is not lowered too much and the masterbatch is readily produced. Furthermore, since the amount of the carbon nanotube (B) is not too small, a high electrical conductivity is readily obtained.

Note that, in the masterbatch, the optional components previously mentioned may be included. The masterbatch can be produced by mixing all components with a tumbler, V-blender, nauta mixer, Banbury mixer, kneading roller, single or twin screw extruding machine, or the like.

### 3. Applications of Electrically Conductive Resin Composition

The electrically conductive resin composition of the present invention is molded by, for example, injection molding, extrusion molding, compression molding, or the like, and is used as a molded product. Note that, among these molding methods, the injection molding method is preferable from the viewpoint of designable properties and moldability.

The electrically conductive resin composition of the present invention is used to produce a molded product for a wide range of applications from home appliances to industrial goods. Examples of the applications include electrical components, electronic components, automotive components, machine mechanical components, food containers, films, sheets, and fibers. Specific examples thereof include business and OA equipment such as printers, personal computers, word processors, keyboards, PDA (personal digital assistants), telephones, cell phones, smartphones, tablet terminals, WiFi routers, facsimile machines, copying machines, ECR (electronic cash registers), electronic calculators, electronic notebooks, electronic dictionaries, cards, holders, and stationery; household electrical appliances such as laundry machines, refrigerators, cleaners, microwave ovens, lighting equipment, game machines, irons, and kotatsu (Japanese foot warmer); AV equipment such as TV, VTR, video cameras, digital cameras, single lens reflex cameras, mobile audio terminals, radio cassette recorders, tape recorders, mini discs, CD players, speakers, and liquid crystal displays; and electrical/electronic components and telecommunication equipment such as connectors, relays, condensers, switches, printed circuit boards, coil bobbins, semiconductor sealing materials, electrical wires, cables, transformers, deflecting yokes, distribution boards, and clocks.

In addition, examples of the applications also include materials for automobiles, vehicles, ships, aircraft, and construction, such as seats (including paddings and outer materials), belts, ceiling coverings, convertible tops, arm rests, door trims, rear package trays, carpets, mats, sun visors, wheel covers, tires, mattress covers, air bags, insulation materials, hangers, hand straps, electrical wire-sheathing materials, electrical insulating materials, paints, coating materials, overlaying materials, floor materials, corner walls, deck panels, covers, plywood, ceiling boards, partition plates, side walls, carpets, wall papers, wall covering materials, exterior materials, interior materials, roofing materials, sound insulating panels, thermal insulating panels, and window materials; and daily and sporting goods, such as clothing, curtains, sheets, plywood, laminated fiber boards, carpets, entrance mats, sheets, buckets, hoses, containers, glasses, bags, cases, goggles, skis, rackets, tents, and musical instruments.

Furthermore, examples of the applications also include bottles for shampoo, detergent, or the like, seasoning bottles for edible oils, soy sauce, or the like, beverage bottles for mineral water, juice, or the like, heat resistant food containers such as lunch boxes and bowls for chawanmushi (Japanese steamed egg custard), tableware such as dishes and chopsticks, various other food containers, packaging films, and packaging bags.

### Examples

The present invention will be described in detail based on Examples, but the present invention is not limited to the following Examples.

### 1. Provision of Raw Materials

### [Thermoplastic Resin (A)]

As the thermoplastic resin (A), Iupilon S-2000F (polycarbonate, MFR: 10 g/10 min, density: 1,200 kg/m³, and bending elastic modulus: 2,300 MPa) manufactured by Mitsubishi Engineering-Plastics Corporation was used. Note that each of these physical properties was measured under the following conditions.

### <MFR>

Measurement was performed in accordance with ISO 1133 at 300°C and with a load of 2.16 kg.

### <Density>

Measurement was performed in accordance with ISO 1183.

### [Carbon Nanotube (B)]

K-Nanos 100P (bulk density: 20 to 40 g/L, outer diameter: 3 to 15 nm, and length: 10 to 50 µm) manufactured by Kumho Petrochemical Co., Ltd. was used. Note that each of these physical properties was measured under the following conditions.

### <Bulk Density>

Measurement was performed in accordance with ASTM D1895.

### <Outer Diameter and Length>

The length and outer diameter of 100 carbon nanotubes were measured using electron microscopy (SEM), and the average values thereof were adopted, respectively.

### [Aromatic Monomer-Modified Polyolefin Wax (C)]

As the aromatic monomer-modified polyolefin wax (C), waxes W1 to W5 shown in Table 1 were used. The waxes W1 to W5 were produced by the production method, which will be mentioned later. Furthermore, results of analysis using the following methods are shown in Table 1. Note that, in the following Table 1, C2 represents ethylene and C3 represents propylene.

**[Table 1]**

| Physical properties | Test method | Wax W1 | Wax W2 | Wax W3 | Wax W4 | Wax W5 |
|---|---|---|---|---|---|---|
| Structure | - | Styrene-modified C2/C3 copolymer | | | | |
| Composition (wax) | ¹³C-NMR | C2:97mol%, C3:3mol% | | | | |
| Styrene modification amount | Specified with the amount charged | 60 mass% based on the entire amount of wax W1 | 60 mass% based on the entire amount of wax W1 | 20 mass% based on the entire amount of wax W1 | 20 mass% based on the entire amount of wax W1 | 20 mass% based on the entire amount of wax W1 |
| Mv (viscosity average molecular weight) | - | 1,500 | 800 | 1,200 | 700 | 400 |
| Mn (in terms of polystyrene) | GPC method | 2,400 | 1,070 | 1,320 | 1,430 | 880 |
| Mw (in terms of polystyrene) | GPC method | 16,200 | 4,730 | 3,120 | 3,660 | 1,790 |
| Molecular weight distribution (Mw/Mn) | GPC method | 6.75 | 4.42 | 2.36 | 2.56 | 2.05 |
| Density | In accordance with JIS K7112 | 1000kg/m³ | 990kg/m³ | 950kg/m³ | 950kg/m³ | 940kg/m³ |
| Softening point | In accordance with JIS K2207 | 105°C | 86°C | 110°C | 105°C | 77°C |
| Melt viscosity @140°C | B-type viscometer | 1100mPa·s | 290mPa·s | 50mPa·s | 20mPa·s | 10mPa·s |

### <Composition>

The amount of each structural unit (the composition ratio of ethylene and propylene) constituting the waxes W1 to W5 was determined through analysis of the ¹³C-NMR spectrum measured under the following conditions. Note that the styrene modification amount (the amount of structural units derived from styrene) was specified with the amount charged.

### • Measurement Conditions of ¹³C-NMR

Apparatus: AVANCE III cryo-500 nuclear magnetic resonance apparatus manufactured by Bruker BioSpin Corp.
Nucleus measured: ¹³C (125 MHz)
Measurement mode: single pulse proton broadband decoupling
Pulse width: 45° (5.00 µsec)
Number of points: 64k
Measurement range: 250 ppm (-55 to 195 ppm)
Repetition time: 5.5 seconds
Cumulative number: 128
Measurement solvent: ortho-dichlorobenzene/benzene-d₆ (4/1 (volume ratio))
Sample concentration: 60 mg/0.6 mL
Measurement temperature: 120°C
Window function: exponential (BF: 1.0 Hz)
Chemical shift reference: δδ signal 29.73 ppm

### <Viscosity Average Molecular Weight (Mv)>

The viscosity average molecular weight was determined by measuring the limiting viscosity [η] in a solvent of decalin at 135°C using a Ubbelohde type capillary viscosity tube and substituting it into the Mark-Kuhn-Houwink equation.

### <Number Average Molecular Weight (Mn) and Weight Average Molecular Weight (Mw), and Molecular Weight Distribution (Mw/Mn)>

The number average molecular weight (Mn) and the weight average molecular weight (Mw) were determined by GPC measurement. The measurement was performed under the following conditions. Then, the number average molecular weight (Mn) and the weight average molecular weight (Mw) were determined from a calibration curve with a commercial monodispersed standard polystyrene to calculate the Mw/Mn.
Apparatus: Gel permeation chromatograph Alliance GPC2000 (manufactured by Waters Corporation)
Solvent: o-dichlorobenzene
Columns: TSKgel GMH6-HT × 2 and TSKgel GMH6-HTL column × 2 (both manufactured by Tosoh Corporation)
Flow rate: 1.0 ml/min
Sample: 0.15 mg/mL o-dichlorobenzene solution
Temperature: 140°C

### <Density>

Measurement was performed in accordance with JIS K7112.

### <Softening Point>

Measurement was performed in accordance with JIS K2207.

### <Melt Viscosity>

The melt viscosity was measured at 140°C, with a B-type viscometer, and at a rotor speed of 60 rpm.

### <Preparation of Wax W1>

### (1) Preparation of Catalyst

In an autoclave made of glass with an internal volume of 1.5 liters, 25 g of commercial anhydrous magnesium chloride was suspended in 500 ml of hexane. While keeping this at 30°C under stirring, 92 ml of ethanol was added dropwise over 1 hour, and the mixture was allowed to react for 1 hour. Subsequently, 93 ml of diethylaluminum monochloride was added dropwise over 1 hour, and the mixture was further allowed to react for 1 hour. After that, 90 ml of titanium tetrachloride was added dropwise, the temperature of the reaction vessel was elevated to 80°C, and the reaction was allowed for 1 hour. Then, the solid part was washed with hexane by decantation until free titanium was no longer detected. Thereafter, the solids (catalyst) were suspended in hexane, the titanium concentration was quantified by titration, and the suspension was subjected to preparation of the unmodified polyolefin wax.

### (2) Preparation of Ethylene-Propylene Copolymer (Unmodified Polyolefin Wax)

In an autoclave made of stainless steel with an internal volume of 2 liters, sufficiently purged with nitrogen, 930 ml of hexane and 70 ml of propylene were charged, and hydrogen was introduced until reaching 20.0 kg/cm² (gauge pressure). Subsequently, after the temperature in the system was elevated to 170°C, polymerization was initiated by pressing in, with ethylene, 0.1 millimole of triethylaluminum, 0.4 millimole of ethylaluminum sesquichloride, and the hexane suspension of the catalyst obtained by the method described above, such that the amount of the titanium component is 0.008 millimole in terms of atoms.

Thereafter, the total pressure was kept at 40 kg/cm² (gauge pressure) by continuously feeding only ethylene, and the polymerization was performed at 170°C for 40 minutes. Then, the polymerization was stopped by adding a small amount of ethanol into the system, and unreacted ethylene and propylene were purged. The resulting polymer solution was dried overnight at 100°C under reduced pressure to obtain an ethylene-propylene copolymer (unmodified polyolefin wax).

### (3) Styrene Modification of Unmodified Polyolefin Wax

To a reactor made of glass, 200 g of the unmodified polyolefin wax obtained by the method mentioned above was charged and melted at 160°C under a nitrogen atmosphere. Next, 300 g of styrene monomers and 30 g of di-t-butyl peroxide (hereinafter, also referred to as "DTBPO") were continuously fed into the reaction system (temperature: 160°C) over 5 hours. Then, after allowing the thermal reaction for 1 hour, the resultant was, while remaining in the molten state, subjected to deaeration treatment for 0.5 hours under 10 mmHg vacuum to remove volatile matters. Thereafter, the reaction product was cooled to obtain a wax W1.

### <Preparation of Wax W2>

A wax W2 was obtained in the same way as the aromatic monomer-modified polyolefin wax W1 described above except that the reaction time upon preparation of the unmodified polyolefin wax was changed.

### <Preparation of Waxes W3 to W5>

Waxes W3 to W5 were obtained in the same way as the aromatic monomer-modified polyolefin wax W1 described above except that the reaction time upon preparation of the unmodified polyolefin wax and the amount of styrene monomers supplied during the styrene modification were changed.

### 2. Preparation of Electrically Conductive Resin Composition

### [Example 1]

Using a co-rotating twin screw extruding machine HK25D (manufactured by Parker Corporation: ϕ25 mm, L/D = 41), 96.1 parts by mass of the thermoplastic resin (A), 3 parts by mass of the carbon nanotube (B), and 0.9 parts by mass of the aromatic monomer-modified polyolefin wax (C) (wax W1) were melt kneaded, and extruded at a cylinder temperature of 280°C to obtain a pelletized electrically conductive resin composition.

### [Example 2]

An electrically conductive resin composition was obtained in the same way as Example 1 except that 93.5 parts by mass of the thermoplastic resin (A), 5 parts by mass of the carbon nanotube (B), and 1.5 parts by mass of the aromatic monomer-modified polyolefin wax (C) (wax W1) were used.

### [Example 3]

An electrically conductive resin composition was obtained in the same way as Example 1 except that 87 parts by mass of the thermoplastic resin (A), 10 parts by mass of the carbon nanotube (B), and 3 parts by mass of the aromatic monomer-modified polyolefin wax (C) (wax W1) were used.

### [Examples 4 to 7]

Electrically conductive resin compositions were obtained in the same way as Example 2 except that the aromatic monomer-modified polyolefin wax (C) was changed to those shown in Table 2.

### [Comparative Example 1]

An electrically conductive resin composition was obtained in the same way as Example 1 except that 97 parts by mass of the thermoplastic resin (A) and 3 parts by mass of the carbon nanotube (B) were used.

### [Comparative Example 2]

An electrically conductive resin composition was obtained in the same way as Example 1 except that 95 parts by mass of the thermoplastic resin (A) and 5 parts by mass of the carbon nanotube (B) were used.

### [Comparative Example 3]

An electrically conductive resin composition was obtained in the same way as Example 1 except that 90 parts by mass of the thermoplastic resin (A) and 10 parts by mass of the carbon nanotube (B) were used.

### [Comparative Example 4]

An electrically conductive resin composition was obtained in the same way as Example 2 except that the aromatic monomer-modified polyolefin wax (C) (wax W1) was changed to the unmodified polyolefin wax mentioned above.

### [Comparative Example 5]

An electrically conductive resin composition was obtained in the same way as Example 2 except that the aromatic monomer-modified polyolefin wax (C) (wax W1) was changed to pentaerythritol stearate (hereinafter, also referred to as "PETS").

### [Comparative Example 6]

An electrically conductive resin composition was obtained in the same way as Example 2 except that the aromatic monomer-modified polyolefin wax (C) (wax W1) was changed to ethylene bis-stearylamide (hereinafter, also referred to as "EBS").

### 3. Evaluation of Electrically Conductive Resin Compositions

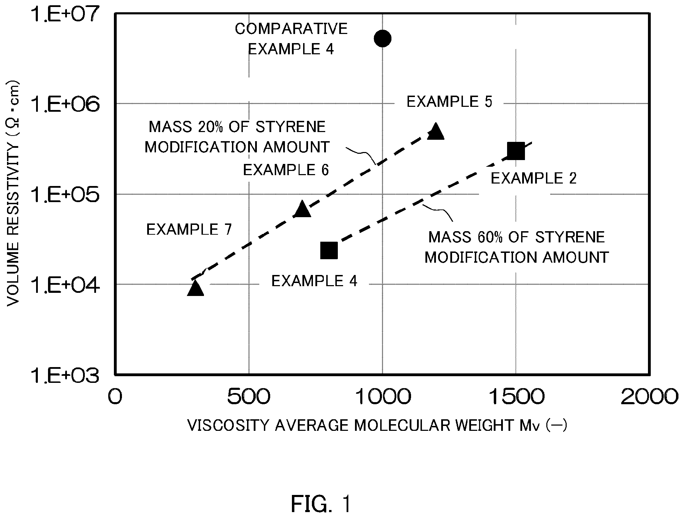

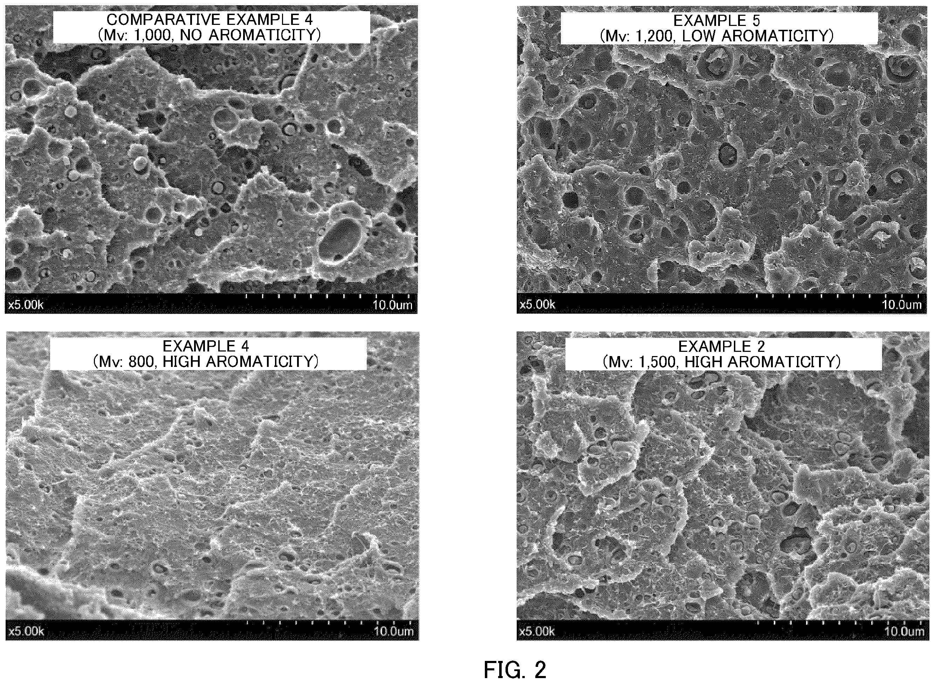

The following evaluations were performed on the electrically conductive resin composition produced in each of Examples and Comparative Examples. The results are shown in Table 2. Also, a graph showing the relationship between the molecular weights (Mv) of the aromatic monomer-modified polyolefin waxes (C) of Examples 2 and 4 to 7 and Comparative Example 4, and the electrical conductivities (volume resistivities) of electrically conductive resin compositions is shown in FIG. 1. Furthermore, electron micrographs illustrating the states of carbon nanotube (B) in the electrically conductive resin compositions of Examples 2, 4, and 5, and Comparative Example 4 is shown in Fig. 2.

### <Torque>

In the Examples and Comparative Examples mentioned above, the torque when pelletizing the electrically conductive resin compositions with the twin screw extruding machine was measured and the average value was calculated.

### <Resin Pressure>

In the Examples and Comparative Examples mentioned above, the resin pressure when pelletizing the electrically conductive resin compositions with the twin screw extruding machine was measured and the average value was calculated.

### <Resin Temperature>

In the Examples and Comparative Examples mentioned above, the resin temperature in the vicinity of the die when pelletizing the electrically conductive resin compositions with the twin screw extruding machine was measured.

### <Electrical Conductivity>

The pellets of the electrically conductive resin composition produced in each of Examples and Comparative Examples were dried at 120°C for 8 hours, and then injection molded using an injection molding machine (manufactured by Niigata Machine Techno Co., Ltd., Niigata NN100) under the following conditions: cylinder temperature of 280°C, screw speed of 60 rpm, injection pressure of 130 MPa, and metal mold temperature of 90°C to produce a test piece. The shape of the test piece conformed to the shape in accordance with JIS K7194 (100 × 100 × 3 mm). Then, using that test piece, the volume resistivity was measured in accordance with JIS K7194.

### <Tensile Strength and Tensile Elongation>

The pellets of the electrically conductive resin composition produced in each of Examples and Comparative Examples were injection molded in the same way as in the electrical conductivity test to produce a test piece. Note that the shape of the test piece conformed to the shape in accordance with JIS K7161. Then, using the injection molded test piece (ISO universal test piece), the tensile strength and the tensile elongation were measured based on JIS K7161 under conditions of a distance between chucks of 115 mm and a testing rate of 50 mm/min.

### <Bending Strength and Bending Elastic Modulus>

The pellets of the electrically conductive resin composition produced in each of Examples and Comparative Examples were injection molded in the same way as in the electrical conductivity test to produce a test piece. Note that the shape of the test piece conformed to the shape in accordance with JIS K7171. Using that test piece (ISO universal test piece), the bending strength and the bending elastic modulus were measured based on JIS K7171 under conditions of a testing rate of 2 mm/min and a bending span of 64 mm.

**[Table 2]**

| | | Unit | Examples | | | | | | | Comparative Examples | | | | | |
|---|---|---|---|---|---|---|---|---|---|---|---|---|---|---|---|
| | | | 1 | 2 | 3 | 4 | 5 | 6 | 7 | 1 | 2 | 3 | 4 | 5 | 6 |
| Composition | Thermoplastic resin (A) | Mass % | 96.1 | 93.5 | 87 | 93.5 | 93.5 | 93.5 | 93.5 | 97 | 95 | 90 | 93.5 | 93.5 | 93.5 |
| | Carbon nanotube (B) | Mass % | 3 | 5 | 10 | 5 | 5 | 5 | 5 | 3 | 5 | 10 | 5 | 5 | 5 |
| | Aromatic monomer-modified polyolefin wax (C) W1 | Mass % | 0.9 | 1.5 | 3 | | | | | | | | | | |
| | Aromatic monomer-modified polyolefin wax (C) W2 | Mass % | | | | 1.5 | | | | | | | | | |
| | Aromatic monomer-modified polyolefin wax (C) W3 | Mass % | | | | | 1.5 | | | | | | | | |
| | Aromatic monomer-modified polyolefin wax (C) W4 | Mass % | | | | | | 1.5 | | | | | | | |
| | Aromatic monomer-modified polyolefin wax (C) W5 | Mass % | | | | | | | 1.5 | | | | | | |
| | Unmodified polyolefin wax | Mass % | | | | | | | | | | | 1.5 | | |
| | PETS | Mass % | | | | | | | | | | | | 1.5 | |
| | EBS | Mass % | | | | | | | | | | | | | 1.5 |
| Processability | Torque | N·m | 49 | 50 | 49 | | | | | 65 | 68 | 83 | 48 | 52 | 60 |
| | Resin pressure | MPa | 1.2 | 1.5 | 1.5 | 1.6 | 1.4 | 1.5 | 1.5 | 1.2 | 1.4 | 2.4 | 2.1 | 1.4 | 1.3 |
| | Resin temperature | °C | 288 | 292 | 292 | 291 | 290 | 289 | 289 | 291 | 294 | 298 | 294 | 295 | 294 |
| Electrical conductivity | Volume resistivity | Ωcm | 3.9E+07 | 3.1E+05 | 1.4E+03 | 2.4E+04 | 5.0E+05 | 6.9E+04 | 9.3E+03 | ≥1.0E+10 | 4.3E+06 | 9.5E+03 | 5.3E+06 | 3.4E+06 | 5.8E+05 |
| Mechanical characteristic s | Tensile strength | MPa | 65.8 | 68.6 | 54.1 | 67.2 | 66.3 | 66.0 | 64.9 | 64.9 | 67.7 | 73.9 | 64.8 | 68.6 | 21.1 |
| | Tensile elongation | % | 7.6 | 7.4 | 2.1 | 6.1 | 7.0 | 6.4 | 5.9 | 7.8 | 8.0 | 6.8 | 5.6 | 5.4 | 1.0 |
| | Bending strength | MPa | 99 | 103 | 94 | 102 | 99 | 98 | 97 | 98 | 102 | 112 | 97 | 102 | 40 |
| | Bending elastic modulus | MPa | 2620 | 2890 | 3460 | 2,820 | 2,800 | 2,790 | 2,750 | 2590 | 2860 | 3530 | 2790 | 2820 | 2880 |

As shown in Table 2, when comparing the electrically conductive resin compositions of Examples 1 to 7 containing the aromatic monomer-modified polyolefin wax (C) with the electrically conductive resin compositions of Comparative Examples 1 to 3 not containing the aromatic monomer-modified polyolefin wax (C), the torque and the resin temperature during processing were more satisfactory in Examples 1 to 7. In addition, they had low volume resistivity values and excellent electrical conductivities. Furthermore, Examples 1 to 7 all had satisfactory mechanical characteristics.

In addition, when comparing the electrically conductive resin compositions of Example 2 and Examples 4 to 7 containing the aromatic monomer-modified polyolefin wax (C) (waxes W1 to W5) with the electrically conductive resin compositions of Comparative Examples 4 to 6 containing the unmodified polyolefin wax and general compatibilizers (PETS or EBS), Example 2 and Examples 4 to 7 showed less increase in resin temperature during processing. It is assumed that the structural units derived from the aromatic monomer in the aromatic monomer-modified polyolefin wax (C) (waxes W1 to W5) have a high affinity with the carbon nanotube (B), and that the carbon nanotubes were dispersed well.

Moreover, as shown in the graph of FIG. 1, it was found that, as the viscosity average molecular weight (softening point) of the aromatic monomer-modified polyolefin wax (C) was lower and the amount of modification by the aromatic (styrene) was higher, the volume resistivity value of the electrically conductive resin composition tends to be lower. Furthermore, as shown in FIG. 2, as the amount of modification by the aromatic in the aromatic monomer-modified polyolefin wax (C) was larger and the viscosity average molecular weight was lower, the dispersibility of the carbon nanotube (B) in the electrically conductive resin composition became more satisfactory, and a correlation was found between the volume resistivity value of the electrically conductive resin composition and the dispersibility of the carbon nanotube (B).

The present application claims priority to Japanese Patent Application No. 2019-085316 filed on April 26, 2019 and Japanese Patent Application No. 2019-203888 filed on November 11, 2019. The contents of these application specifications and their accompanying drawings are all incorporated herein.

### Industrial Applicability

The electrically conductive resin composition of the present invention has both high electrical conductivity and excellent processability. Accordingly, it can be applied to a wide range of applications from home appliances to industrial goods.

## Claims

1. An electrically conductive resin composition, comprising:
a thermoplastic resin (A);
a carbon nanotube (B) with an outer diameter of 100 nm or less;
an aromatic monomer-modified polyolefin wax (C) obtained by modifying a polyolefin wax with an aromatic monomer, wherein
the composition comprises 74.9 to 99.4 parts by mass of the thermoplastic resin (A), 0.5 to 25 parts by mass of the carbon nanotube (B), and 0.1 to 10 parts by mass of the aromatic monomer-modified polyolefin wax (C) based on 100 parts by mass of the total amount of the thermoplastic resin (A), the carbon nanotube (B), and the aromatic monomer-modified polyolefin wax (C).

2. The electrically conductive resin composition according to claim 1, wherein the aromatic monomer-modified polyolefin wax (C) satisfies the following (i) to (iv):
(i) a number average molecular weight (Mn) in terms of polystyrene, measured by gel permeation chromatography (GPC), ranges from 300 to 10,000;
(ii) a ratio (Mw/Mn) between a weight average molecular weight (Mw) and a number average molecular weight (Mn), measured by gel permeation chromatography (GPC), is 9.0 or less;
(iii) a softening point measured in accordance with JIS K2207 ranges from 70 to 170°C; and
(iv) a density measured in accordance with JIS K7112 ranges from 830 to 1,200 kg/m³.

3. The electrically conductive resin composition according to claim 1 or 2, wherein the aromatic monomer-modified polyolefin wax (C) is a compound obtained by modifying a copolymer of ethylene and at least one α-olefin selected from C₃₋₁₂ α-olefins with an aromatic monomer.

4. The electrically conductive resin composition according to any one of claims 1 to 3, wherein an amount of structural units derived from the aromatic monomer in the aromatic monomer-modified polyolefin wax (C) ranges from 5 to 95mass%.

5. The electrically conductive resin composition according to any one of claims 1 to 4, wherein the thermoplastic resin (A) is at least one resin selected from the group consisting of an ethylene (co)polymer, a propylene (co)polymer, and a polycarbonate.

6. A method of producing the electrically conductive resin composition according to any one of claims 1 to 5, comprising:
providing a masterbatch comprising the thermoplastic resin (A), the carbon nanotube (B), and the aromatic monomer-modified polyolefin wax (C); and
melt kneading the masterbatch and the thermoplastic resin (A).

7. A molded product obtained from the electrically conductive resin composition according to any one of claims 1 to 5.
